# EUROPEAN PATENT APPLICATION

(11) **EP 4 790 784 A1**
(43) Date of publication of application: **12.08.2026**
(21) Application number: 24874668.7
(22) Date of filing: 03.10.2024
(51) Int. Cl.: H01M 10/058, H01M 4/13, H01M 4/62, H01M 10/0562

(54) **METHOD FOR CONVEYING SULFIDE SOLID ELECTROLYTE**

(30) Priority: 06.10.2023 JP 2023174218
(71) Applicant: Idemitsu Kosan Co.,Ltd., Tokyo 100-8321 (JP)
(72) Inventor: TAMURA, Hiroyuki, Tokyo 100-8321 (JP); AIDA, Masao, Tokyo 100-8321 (JP); KAGOTA, Yasuhito, Tokyo 100-8321 (JP); TANABE, Ryo, Tokyo 100-8321 (JP); KONDO, Katsuhito, Tokyo 100-8321 (JP)
(74) Representative: Vossius & Partner Patentanwälte Rechtsanwälte mbB
(86) International application number: PCT/JP2024/035372
(87) International publication number: WO 2025/075068

(57) **Abstract**

Provided is a method for conveying a sulfide solid electrolyte, including a step of compressing a powdered sulfide solid electrolyte containing a lithium atom, a sulfur atom, and a phosphorus atom to obtain a pressed powder, a step of filling a packaging container with the pressed powder to obtain a packaged body, a step of conveying the packaged body, and a step of removing the pressed powder from the packaged body and crushing the pressed powder to obtain a crushed product.

## Description

### Technical Field

The present invention relates to a method for conveying a sulfide solid electrolyte.

### Background Art

With rapid spread of information-related instruments, communication instruments, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. However, development of batteries having a solid electrolyte layer in place of an electrolytic solution is being made in view of the fact that by making the battery fully solid, simplification of a safety unit may be realized without using a flammable organic solvent within the battery, and the battery is excellent in manufacturing costs and productivity.

As a method for conveying a solid electrolyte, PTL 1 discloses a packaging body that protects a thin plate-like solid electrolyte.

### Citation List

### Patent Literature

PTL 1: JP 2010-105729 A

### Summary of Invention

### Technical Problem

When preparing an electrode composite material using a sulfide solid electrolyte and an electrode active material, the sulfide solid electrolyte is sometimes produced first, then conveyed to another location, and then mixed with the electrode active material to produce the electrode composite material. Thus, it may be necessary to convey the sulfide solid electrolyte to another factory after the sulfide solid electrolyte is produced.

However, sulfide solid electrolytes are often powders with a particle size of about 0.1 to several microns, and their bulkiness and tendency to scatter make them difficult to convey. Furthermore, since sulfide solid electrolytes may generate hydrogen sulfide upon contact with air and the moisture contained therein, it is particularly important to suppress scattering during conveyance.

The present inventors, considering the properties of sulfide solid electrolytes, have been diligently developing a suitable conveying method and have found that the problem can be solved by conveying the sulfide solid electrolyte in the form of a pressed powder.

That is, an object of the present invention is to provide a method for efficiently conveying a sulfide solid electrolyte while preventing scattering.

### Solution to Problem

The method for conveying a sulfide solid electrolyte according to the present invention is a method for conveying a sulfide solid electrolyte, including
a step of compressing a powdered sulfide solid electrolyte containing a lithium atom, a sulfur atom, and a phosphorus atom to obtain a pressed powder,
a step of filling a packaging container with the pressed powder to obtain a packaged body,
a step of conveying the packaged body, and
a step of removing the pressed powder from the packaged body and crushing the pressed powder to obtain a crushed product.

### Advantageous Effects of Invention

According to the present invention, a method for efficiently conveying a sulfide solid electrolyte while preventing scattering can be provided.

### Description of Embodiments

Hereinafter, embodiments of the present invention (hereinafter sometimes referred to as "the present embodiment") will be described. In the present description, the upper and lower limit numerical values relating to the numerical ranges of "X or more," "Y or less," and "X to Y" can be arbitrarily combined, and the numerical values in the examples can also be used as the upper and lower limit numerical values. Furthermore, preferred provisions can be adopted arbitrarily. That is, one preferred provision can be adopted in combination with one or more other preferred provisions. Combinations of preferred provisions are considered more preferable.

### (Findings obtained by the present inventors leading to the present invention)

As a result of diligent research to solve the above problems, the present inventors have discovered the following matters and have completed the present invention.

PTL 1 relates to a packaging body for protecting a thin plate-like solid electrolyte, and discloses a method for protecting a solid electrolyte already formed into a thin plate from damage and adhesion of foreign matter, but fails to mention a method for conveying a powdered sulfide solid electrolyte.

In contrast, the present inventors have found that the sulfide solid electrolyte can be efficiently conveyed while preventing scattering by first forming the powdered sulfide solid electrolyte into a pressed powder, filling a packaging container with the pressed powder to form a packaged body, then conveying the packaged body, and finally crushing the pressed powder, and thus have completed the present invention.

### (Various forms of the present embodiment)

The method for conveying a sulfide solid electrolyte according to a first form of the present embodiment is a method for conveying a sulfide solid electrolyte, including
a step of compressing a powdered sulfide solid electrolyte containing a lithium atom, a sulfur atom, and a phosphorus atom to obtain a pressed powder,
a step of filling a packaging container with the pressed powder to obtain a packaged body,
a step of conveying the packaged body, and
a step of removing the pressed powder from the packaged body and crushing the pressed powder to obtain a crushed product.

Conventionally, when conveying a powdered solid electrolyte, a common method was to directly place the solid electrolyte in a container such as a bag for conveyance. However, there was a problem in that the powdered solid electrolyte tended to scatter in a step of putting the solid electrolyte into the container and a step after removing the solid electrolyte from the container.

Therefore, in order to solve the above problem, the present inventor have found that the problem could be solved by intentionally compressing the powdered sulfide solid electrolyte into a pressed powder before conveyance, and then crushing the pressed powder at the destination.

The method for conveying a sulfide solid electrolyte according to a second form of the present embodiment is a method in which, in the first form,
the pressed powder has a density of 0.2 g/cm³ or more.

From the viewpoint of suppressing the scattering of the sulfide solid electrolyte during conveyance and improving conveyance efficiency, it is preferable to set the density of the pressed powder within the above range.

The method for conveying a sulfide solid electrolyte according to a third form of the present embodiment is a method in which, in the first or second form,
in the step of obtaining the pressed powder, a solvent is added to the powdered sulfide solid electrolyte before compressing.

It is preferable to obtain a pressed powder in a state in which a solvent has been added to the powdered sulfide solid electrolyte, from the viewpoint of preventing powder scattering during the step of obtaining the pressed powder.

The method for conveying a sulfide solid electrolyte according to a fourth form of the present embodiment is a method in which, in any one of the first to third forms,
in the step of obtaining the crushed product, a solvent is added to the pressed powder before crushing.

It is preferable to crush the pressed powder in a state in which a solvent has been added thereto, from the viewpoint of preventing powder scattering during the step of obtaining the crushed product.

The method for conveying a sulfide solid electrolyte according to a fifth form of the present embodiment is a method in which, in any one of the first to fourth forms,
the packaging container includes one or more bag-like bodies, and at least one of the bag-like bodies is composed of a plastic film having a metal thin film layer.

As the packaging container, it is preferable to use one made of a plastic film having a metal thin film layer that has low moisture permeability, from the viewpoint of preventing the sulfide solid electrolyte from easily coming into contact with moisture contained in the outside air.

The method for conveying a sulfide solid electrolyte according to a sixth form of the present embodiment is a method in which, in any one of the first to fifth forms,
further including packaging the packaged body in an outer container before conveying.

Packaging the packaging container in an outer container makes it easier to protect the pressed powder inside the packaging container from external shocks during conveyance.

The method for conveying a sulfide solid electrolyte according to a seventh form of the present embodiment is a method in which, in the sixth form,
the outer container is one or more selected from a metal can and a plastic container.

The outer container is preferably a metal can or a plastic container from the viewpoint of protecting the inner packaging container.

A system for conveying a sulfide solid electrolyte according to an eighth form of the present embodiment is a system including:
a compression molding equipment for compressing a powdered sulfide solid electrolyte containing a lithium atom, a sulfur atom, and a phosphorus atom to obtain a pressed powder;
a packaging equipment for filling a packaging container with the pressed powder to obtain a packaged body;
a conveying unit for conveying the packaged body; and
a crushing equipment for removing the pressed powder from the packaged body and crushing the pressed powder to obtain a crushed product.

The above conveying system achieves the method for conveying a sulfide solid electrolyte of the present embodiment described above.

A method for producing an all-solid-state battery material according to a ninth form of the present embodiment is a method including
a step of compressing a powdered sulfide solid electrolyte containing a lithium atom, a sulfur atom, and a phosphorus atom to obtain a pressed powder;
a step of filling a packaging container with the pressed powder to obtain a packaged body;
a step of conveying the packaged body; and
a step of removing the pressed powder from the packaged body and crushing the pressed powder to obtain a crushed product.

An all-solid-state battery according to a tenth form of the present embodiment is a battery containing an all-solid-state battery material obtained by the production method according to the ninth form in a solid electrolyte layer.

An electrode composite material according to an eleventh form of the present embodiment is a material containing an all-solid-state battery material obtained by the production method according to the ninth form and an electrode active material.

The all-solid-state battery according to a twelfth form of the present embodiment is a battery containing the electrode composite material according to the eleventh form in at least one of a positive electrode and a negative electrode.

The production method described above makes it possible to produce an all-solid-state battery material and an all-solid-state battery using the all-solid-state battery material while suppressing the scattering of the sulfide solid electrolyte.

A packaged body according to a thirteenth form of the present embodiment is a packaged body obtained by filling a packaging container with a pressed powder obtained by compressing a powdered sulfide solid electrolyte containing a lithium atom, a sulfur atom, and a phosphorus atom.

The above packaged body allows for the conveyance of the sulfide solid electrolyte while suppressing the scattering of the sulfide solid electrolyte.

The packaged body according to a fourteenth form of the present embodiment is a packaged body further including an outer container in the thirteenth form.

It is preferable to include an outer container from the viewpoint of protecting the pressed powder.

A method for conveying a sulfide solid electrolyte according to a fifteenth form of the present embodiment is a method including
a step of compressing a powdered sulfide solid electrolyte containing a lithium atom, a sulfur atom, and a phosphorus atom to obtain a pressed powder,
in which the pressed powder has a density of 0.2 g/cm³ or more.

The pressed body obtained by compressing the powdered sulfide solid electrolyte has a density within the above range, which makes it possible to efficiently convey the sulfide solid electrolyte while preventing scattering of the sulfide solid electrolyte during conveyance.

A method for producing an all-solid-state battery material according to a sixteenth form of the present embodiment is a method including
a step of compressing a powdered sulfide solid electrolyte containing a lithium atom, a sulfur atom, and a phosphorus atom to obtain a pressed powder,
in which the pressed powder has a density of 0.2 g/cm³ or more.

The pressed body obtained by compressing the powdered sulfide solid electrolyte has a density within the above range, which makes it possible to efficiently produce an all-solid-state battery material while suppressing the scattering of the sulfide solid electrolyte.

### (Sulfide Solid Electrolyte)

The sulfide solid electrolyte used as the pressed powder in the conveying method of the present embodiment may be any general sulfide solid electrolyte as to be described below, and the production method thereof is not particularly limited.

In the present description, a "solid electrolyte" means an electrolyte that remains solid at 25°C under a nitrogen atmosphere. The sulfide solid electrolyte in the present embodiment is a solid electrolyte containing a lithium atom, a sulfur atom, and a phosphorus atom, and having ion conductivity attributable to the lithium atom.

The "sulfide solid electrolyte" includes both an amorphous sulfide solid electrolyte and a crystalline sulfide solid electrolyte.

In the present description, a "crystalline sulfide solid electrolyte" refers to a sulfide solid electrolyte in which a peak originating from the solid electrolyte is observed in an X-ray diffraction pattern in X-ray diffraction measurement, regardless of the presence or absence of peaks originating from the raw materials of the sulfide solid electrolyte. That is, the crystalline sulfide solid electrolyte contains a crystal structure derived from the solid electrolyte, and it may contain a crystal structure derived from the solid electrolyte in part or entirely. Furthermore, the crystalline sulfide solid electrolyte may contain an amorphous sulfide solid electrolyte in part, as long as it has the X-ray diffraction pattern as described above. Therefore, the crystalline sulfide solid electrolyte contains so-called glass ceramics obtained by heating an amorphous sulfide solid electrolyte to a temperature equal to or above the crystallization temperature.

Furthermore, in the present description, an "amorphous sulfide solid electrolyte" refers to an electrolyte having an X-ray diffraction pattern in X-ray diffraction measurement that is a halo pattern in which substantially no peaks other than those originating from the raw materials are observed, regardless of the presence or absence of peaks originating from the raw materials of the sulfide solid electrolyte.

Examples of the crystal structure of the crystalline sulfide solid electrolyte include an Li₃PS₄ crystal structure, an Li₄P₂S₆ crystal structure, an Li₇PS₆ crystal structure, an Li₇P₃S₁₁ crystal structure, and a crystal structure having peaks near 2θ = 20.2° and 23.6° (for example, JP 2013-16423 A). Examples thereof also include Li₄₋ₓGe₁₋ₓPₓS₄-based thio-LISICON Region II type crystal structure (see Kanno et al., Journal of The Electrochemical Society, 148(7) A742-746 (2001)), and crystal structures similar to the Li₄₋ₓGe₁₋ₓPₓS₄-based thio-LISICON Region II type (see Solid State Ionics, 177 (2006), 2721-2725).

Among the above, the thio-LISICON Region II type crystal structure is preferred for the crystal structure of the crystalline sulfide solid electrolyte from the viewpoint of obtaining a higher ionic conductivity. Here, a "thio-LISICON Region II type crystal structure" refers to either the Li₄₋ₓGe₁₋ₓPₓS₄-based thio-LISICON Region II type crystal structure or a crystal structure similar to the Li₄₋ₓGe₁₋ₓPₓS₄-based thio-LISICON Region II type crystal structure.

The above crystalline sulfide solid electrolyte may contain the thio-LISICON Region II type crystal structure, or it may contain the thio-LISICON Region II type crystal structure as a main crystal. However, from the viewpoint of obtaining a higher ionic conductivity, it is preferable that the crystalline sulfide solid electrolyte contains the thio-LISICON Region II type crystal structure as the main crystal. In the present description, "containing as the main crystal" means that the proportion of a target crystal structure among the crystal structures is 80% or more, preferably 90% or more, and more preferably 95% or more. Furthermore, from the viewpoint of obtaining a higher ionic conductivity, it is preferable that the above crystalline sulfide solid electrolyte does not contain crystalline Li₃PS₄(β-Li₃PS₄).

In X-ray diffraction measurements using CuKα radiation, the diffraction peaks of the Li₃PS₄ crystal structure appear, for example, near 2θ = 17.5°, 18.3°, 26.1°, 27.3°, and 30.0°. The diffraction peaks of the Li₄P₂S₆ crystal structure appear, for example, near 2θ = 16.9°, 27.1°, and 32.5°. The diffraction peaks of the Li₇PS₆ crystal structure appear, for example, near 2θ = 15.3°, 25.2°, 29.6°, and 31.0°. The diffraction peaks of the Li₇P₃S₁₁ crystal structure appear, for example, near 2θ = 17.8°, 18.5°, 19.7°, 21.8°, 23.7°, 25.9°, 29.6°, and 30.0°. The diffraction peaks of the Li₄₋ₓGe₁₋ₓPₓS₄ thio-LISICON Region II type crystal structure appear, for example, near 2θ = 20.1°, 23.9°, and 29.5°. The diffraction peaks of a crystal structure similar to the Li₄₋ₓGe₁₋ₓPₓS₄ thio-LISICON Region II type appear, for example, near 2θ = 20.2° and 23.6°. These peak positions may vary within a range of ±0.5°.

As the crystalline sulfide solid electrolyte, a crystalline sulfide solid electrolyte having an argyrodite-type crystal structure, which has the structural framework of Li₇PS₆ described above and in which a part of P is substituted with Si, is also preferably mentioned.

Examples of the compositional formula of the argyrodite-type crystal structure include crystal structures represented by compositional formulas Li₇₋ₓP_{1-y}Si_{y}S₆ and Li₇₊ₓP_{1-y}Si_{y}S₆ (where x is -0.6 to 0.6, and y is 0.1 to 0.6). The argyrodite-type crystal structure represented by the compositional formula is cubic or orthorhombic, preferably cubic, and has peaks that mainly appear at positions of 2θ = 15.5°, 18.0°, 25.0°, 30.0°, 31.4°, 45.3°, 47.0°, and 52.0° in the X-ray diffraction measurement using CuKα radiation.

Examples of the compositional formula of the argyrodite-type crystal structure also include a compositional formula Li_{7-x-2y}PS_{6-x-y}Clₓ (0.8 x 1.7, 0 < y -0.25x + 0.5). The argyrodite-type crystal structure represented by the compositional formula is preferably cubic, and has peaks that mainly appear at positions of 2θ = 15.5°, 18.0°, 25.0°, 30.0°, 31.4°, 45.3°, 47.0°, and 52.0° in the X-ray diffraction measurement using CuKα radiation.

Furthermore, examples of the compositional formula of the argyrodite-type crystal structure also include a compositional formula Li₇₋ₓPS₆₋ₓHaₓ (Ha is Cl or Br, and x is preferably 0.2 to 1.8). The argyrodite-type crystal structure represented by the compositional formula is preferably cubic, and has peaks that appear mainly at positions of 2θ = 15.5°, 18.0°, 25.0°, 30.0°, 31.4°, 45.3°, 47.0°, and 52.0° in the X-ray diffraction measurements using CuKα radiation.

These peak positions may vary within a range of ±0.5°.

Furthermore, it is preferable that the composition ratio of the atoms contained in the crystalline sulfide solid electrolyte is the composition ratio given by the compositional formula corresponding to the various crystal structures described above. Within the range of composition ratios for each atom, it becomes easier to form the thio-LISICON Region II type crystal structure or the argyrodite type crystal structure among the aforementioned crystal structures.

The above crystalline sulfide solid electrolyte may contain residues of one or more of a complexing agent and a solvent used during the production.

The total content of the complexing agent and the solvent contained in the crystalline sulfide solid electrolyte is most preferably 0% by mass; however, from the viewpoint of efficiently obtaining a sulfide solid electrolyte having a high ionic conductivity, it is usually 10% by mass or less, preferably 8% by mass or less, more preferably 5% by mass or less, even more preferably 3.0% by mass or less, and particularly preferably 1.0% by mass or less.

The above sulfide solid electrolyte contains a lithium atom, a sulfur atom, and a phosphorus atom, and preferably contains a lithium atom, a sulfur atom, a phosphorus atom, and a halogen atom. Representative preferable examples thereof include a solid electrolyte composed of lithium sulfide and phosphorus sulfide, such as Li₂S-P₂S₅; a solid electrolyte composed of lithium sulfide, phosphorus sulfide, and lithium halide, such as Li₂S-P₂S₅-LiI, Li₂S-P₂S₅-LiCl, Li₂S-P₂S₅-LiBr, and Li₂S-P₂S₅-LiI-LiBr; and a solid electrolyte further containing other atoms such as an oxygen atom and a silicon atom, such as Li₂S-P₂S₅-Li₂O-LiI and Li₂S-SiS₂-P₂S₅-LiI. From the viewpoint of obtaining a higher ionic conductivity, a solid electrolyte composed of lithium sulfide, phosphorus sulfide, and lithium halide, such as Li₂S-P₂S₅-LiI, Li₂S-P₂S₅-LiCl, Li₂S-P₂S₅-LiBr, and Li₂S-P₂S₅-LiI-LiBr, is preferred, and a solid electrolyte composed of lithium sulfide, phosphorus sulfide, and two kinds of lithium halides, such as Li₂S-P₂S₅-LiI-LiBr, is more preferred.

The types of atoms constituting the sulfide solid electrolyte can be confirmed, for example, by ICP emission spectrometry.

In the sulfide solid electrolyte (amorphous sulfide solid electrolyte and crystalline sulfide solid electrolyte), the composition ratio (molar ratio) of the lithium atom, the phosphorus atom, the sulfur atom, and the halogen atom is preferably 1.0 to 1.8:0.1 to 0.8:1.0 to 2.0:0.01 to 0.6, more preferably 1.1 to 1.7:0.2 to 0.6:1.2 to 1.8:0.05 to 0.5, and even more preferably 1.2 to 1.6:0.25 to 0.5:1.3 to 1.7:0.08 to 0.4. Furthermore, when bromine and iodine, or bromine and chlorine are used in combination as the halogen atoms, the composition ratio (molar ratio) of the lithium atom, the phosphorus atom, the sulfur atom, the bromine, and the iodine (or chlorine) is preferably 1.0 to 1.8:0.1 to 0.8:1.0 to 2.0:0.01 to 0.3:0.01 to 0.3, more preferably 1.1 to 1.7:0.2 to 0.6:1.2 to 1.8:0.02 to 0.25:0.02 to 0.25, even more preferably 1.2 to 1.6:0.25 to 0.5:1.3 to 1.7:0.03 to 0.2:0.03 to 0.2, and further more preferably 1.35 to 1.45:0.3 to 0.45:1.4 to 1.7:0.04 to 0.18:0.04 to 0.18.

By setting the composition ratio (molar ratio) of the lithium atom, the sulfur atom, the phosphorus atom, and the halogen atom within the above range, it becomes easier to obtain a solid electrolyte with a higher ionic conductivity, having a crystal structure to be described later, particularly a thio-LISICON Region II type crystal structure or an argyrodite type crystal structure.

The average particle size (D₅₀) of the powdered sulfide solid electrolyte is, for example, preferably 0.01 µm or more, more preferably 0.03 µm or more, even more preferably 0.05 µm or more, and particularly preferably 0.1 µm or more, and is preferably 200.0 µm or less, more preferably 100.0 µm or less, even more preferably 10.0 µm or less, particularly preferably 5.0 µm or less, and most preferably 1.0 µm or less.

### [Method for Conveying Sulfide Solid Electrolyte]

The method for conveying a sulfide solid electrolyte according to the present embodiment is a method including
a step of compressing a powdered sulfide solid electrolyte containing a lithium atom, a sulfur atom, and a phosphorus atom to obtain a pressed powder,
a step of filling a packaging container with the pressed powder to obtain a packaged body,
a step of conveying the packaged body, and
a step of removing the pressed powder from the packaged body and crushing the pressed powder to obtain a crushed product.

In addition, another method for conveying a sulfide solid electrolyte according to the present embodiment is a method including
a step of compressing a powdered sulfide solid electrolyte containing a lithium atom, a sulfur atom, and a phosphorus atom to obtain a pressed powder,
in which the pressed powder has a density of 0.2 g/cm³ or more.

The aforementioned other method for conveying a sulfide solid electrolyte according to the present embodiment includes the [step of obtaining a pressed powder], and the subsequent steps are not particularly limited as long as the density of the obtained pressed powder is within the above range. However, the method preferably includes the [step of obtaining a packaged body], the [conveying step], and the [step of obtaining a crushed product] which will be described later, from the viewpoint of further enhancing the effects of the present embodiment.

### [Step of Obtaining a Pressed Powder]

The conveying method of the present embodiment includes a step of compressing a powdered sulfide solid electrolyte containing a lithium atom, a sulfur atom, and a phosphorus atom to obtain a pressed powder.

The step of obtaining a pressed powder is performed in a compression molding equipment.

Examples of the method for compressing the powdered sulfide solid electrolyte include a method of placing the sulfide solid electrolyte into a mold with a predetermined shape of indentation and pressing the sulfide solid electrolyte to granulate it into pellets, and a method of using a roller compactor to press the sulfide solid electrolyte between two rotating rolls, and further crushing the sulfide solid electrolyte into flakes as needed.

The temperature during pressing with the roller compactor is typically 20 to 60°C, and the pressure is typically 0.1 to 1 ton per 1 cm of roll width.

In the step of obtaining the pressed powder, a solvent can be added to the powdered sulfide solid electrolyte before compressing.

The solvent can be broadly selected from solvents conventionally used in the production of solid electrolytes, and examples thereof include a hydrocarbon solvent such as an aliphatic hydrocarbon solvent, an alicyclic hydrocarbon solvent, and an aromatic hydrocarbon solvent, and a compound containing a heteroatom, such as a nitrogen atom, an oxygen atom, a halogen atom such as a chlorine atom, and a sulfur atom.

The amount of the solvent added is preferably 1.0 to 20% by mass, more preferably 3.0 to 15% by mass, and even more preferably 5.0 to 12% by mass, based on the total amount of the sulfide solid electrolyte. The amount of the solvent added with respect to the sulfide solid electrolyte is preferably 1.0% by mass or more from the viewpoint of preventing powder scattering in the step of obtaining the pressed powder, and is preferably 20% by mass or less because the solvent is less likely to seep out from the sulfide solid electrolyte in the step of obtaining the pressed powder.

The size of the pressed powder is not particularly limited; however, the maximum diameter or length is preferably 0.1 to 100 mm, and more preferably 0.5 to 50 mm. Furthermore, the shape of the pressed powder is not particularly limited; however, it can be cylindrical, elliptical cylindrical, triangular prismatic, tubular, rectangular parallelepiped, cubic, elliptical, spherical, lens-shaped, flake-shaped, etc.

In addition, the density of the pressed powder is not particularly limited; however, it is preferably 0.2 g/cm³ or more, more preferably 0.4 to 1.6 g/cm³, and even more preferably 0.8 to 1.5 g/cm³. When the density of the pressed powder is 0.2 g/cm³ or more, the scattering of the sulfide solid electrolyte can be effectively suppressed, and the efficiency during conveyance is improved. On the other hand, when the density of the pressed powder is 1.6 g/cm³ or less, the pressed powder becomes easier to crush.

### [Step of Obtaining a Packaged Body]

The conveying method of the present embodiment includes a step of filling a packaging container with the pressed powder to obtain a packaged body.

The step of obtaining the packaged body is performed in a packaging equipment.

Any type of packaging container may be used, and examples of the packaging container include bags, cans, and bottles.

Moreover, the material of the packaging container is preferably one with low moisture permeability from the viewpoint of preventing the sulfide solid electrolyte from coming into contact with moisture in the outside air, and specifically, preferably one selected from metal, glass, and plastic. When the packaging container is a bag made of a plastic film, it is preferably made of a plastic film with a metal thin film layer.

Furthermore, two or more of the above packaging containers may be combined.

More specifically, from the viewpoint of handling properties when removing the pressed powder in the step of obtaining a crushed product to be described later, the packaging container preferably has one or more bag-shaped bodies, and at least one of the bag-shaped bodies is preferably composed of a plastic film having a metal thin film layer.

From the viewpoint of protecting the contents during conveyance, it is preferable to further package the packaged body in an outer container before conveying.

The outer container may be a single container, or a combination of a plurality of containers.

Specifically, the outer container is preferably selected from a metal can and a plastic container.

Furthermore, by filling the inside of the outer container with air or an inert gas to create a pressurized state, the intrusion of moisture from the outside can be suppressed. Examples of the inert gas include nitrogen gas.

More specifically, the packaged body preferably has the following configurations (1) to (3):
(1) A packaged body in which a pressed powder is packaged in a packaging container having one or more bag-like bodies, and is further packaged in an outer container selected from one or more metal cans and plastic containers.
(2) A packaged body in which a pressed powder is packaged in a packaging container having a plurality of bag-like bodies, at least one of which is composed of a plastic film having a metal thin film layer, and the packaged pressed powder is further packaged in an outer container selected from one or more metal cans and plastic containers.
(3) A packaged body in which a pressed powder is packaged in a packaging container having a plurality of bag-like bodies, at least one of which is composed of a plastic film having a metal thin film layer, and the packaged pressed powder is further packaged in a plastic container, and then further packaged in a metal can.

### [Conveying Step]

The conveying method of the present embodiment includes a step of conveying the packaged body.

The step of conveying the packaged body is performed by a conveying unit.

The conveying unit is a unit for conveying the packaged body from the packaging equipment to the crushing equipment to be described later. The conveying unit is not particularly limited, and examples thereof include one or more selected from human power, vehicles, ships, and aircraft, and multiple types can be combined. Specific examples of the vehicles include automobiles such as trucks, as well as railway vehicles.

### [Step of Obtaining Crushed Product]

The conveying method of the present embodiment includes a step of removing the pressed powder from the packaged body, crushing the pressed powder, and obtaining a crushed product.

The step of obtaining the crushed product is performed by a crushing equipment.

The crushing equipment is not particularly limited as long as it can crush the pressed powder and return it to a powder state. For example, a pulverizer may be used.

Specific examples of the pulverizer include a dry pulverizer and a wet pulverizer, and a dry or wet media-type pulverizer using a grinding medium is preferably used. When crushing the pressed powder in a state in which a solvent has been added thereto, it is preferable to use a wet pulverizer capable of handling wet grinding.

The solvent used here can be the same as that used in the step of obtaining the pressed powder described above.

Examples of the dry pulverizer include a dry media-type pulverizer, such as a dry bead mill, a dry ball mill, and a dry vibration mill, and a dry non-media pulverizer, such as a jet mill.

Representative examples of the wet pulverizer include a wet bead mill, a wet ball mill, and a wet vibration mill. Among these, a wet bead mill using beads as grinding media is preferred because the pulverizing conditions can be freely adjusted and it is easier to handle materials with smaller particle sizes.

Furthermore, examples of the pulverizer include a machines that can pulverize a target object using ultrasonic waves, such as those referred to as sonicators, ultrasonic homogenizers, and probe ultrasonic pulverizers.

The step of obtaining the crushed product may be performed by carrying out the crushing step alone, or it may be performed while mixing the sulfide solid electrolyte with other materials.

Other materials include, for example, electrode active materials, conductive materials, and binders.

As for the electrode active material, depending on whether the electrode composite material is used for the positive electrode or the negative electrode, a positive electrode active material or a negative electrode active material is used, respectively.

The positive electrode active material is not particularly limited as long as it can promote a battery chemical reaction involving the movement of lithium ions, which are derived from atoms used as atoms that exhibit ion conductivity, preferably lithium atoms, in relation to the negative electrode active material. Examples of such positive electrode active materials where lithium ions can be inserted and extracted include oxide-based positive electrode active materials and sulfide-based positive electrode active materials.

Preferred examples of the oxide-based positive electrode active materials include lithium-containing transition metal composite oxides such as LMO (lithium manganese oxide), LCO (lithium cobalt oxide), NMC (lithium nickel manganese cobalt oxide), NCA (lithium nickel cobalt aluminum oxide), LNCO (lithium nickel cobalt oxide), and olivine-type compounds (LiMeNPO₄, Me = Fe, Co, Ni, Mn).

Examples of the sulfide-based positive electrode active materials include titanium sulfide (TiS₂), molybdenum sulfide (MoS₂), iron sulfide (FeS, FeS₂), copper sulfide (CuS), and nickel sulfide (Ni₃S₂).

In addition to the above positive electrode active materials, niobium selenide (NbSe₃), etc., can also be used.

The positive electrode active material can be used alone or in combination of two or more types.

The negative electrode active material is not particularly limited as long as it can promote a battery chemical reaction involving the movement of lithium ions, which are derived from atoms used as atoms that exhibit ion conductivity, preferably lithium atoms, of metals capable of forming alloys with lithium atoms, oxides thereof, and alloys of these metals with lithium atoms. As the negative electrode active materials where lithium ions can be inserted and extracted, any material known as negative electrode active materials in the battery field can be used without limitation.

Examples of such negative electrode active materials include metallic lithium, or metals capable of forming alloys with metallic lithium, such as metallic indium, metallic aluminum, metallic silicon, and metallic tin, oxides of these metals, and alloys of these metals with metallic lithium.

The electrode active material used in the present embodiment may have a coating layer on its surface.

Examples of materials for forming the coating layer include ion conductors that exhibit ion conductivity in a sulfide solid electrolyte, such as nitrides, oxides, or composites thereof of atoms, preferably lithium atoms. Specifically, examples include lithium nitride (Li₃N), conductors having a LISICON type crystal structure such as Li₄₋₂ₓZnₓGeO₄, with Li₄GeO₄ as the main structure, conductors having a thio-LISICON type crystal structure such as Li₄₋ₓGe₁₋ₓPₓS₄, with a Li₃PO₄ type skeleton structure, conductors having a perovskite-type crystal structure such as La_{2/3-x}Li₃ₓTiO₃, and conductors having a NASICON-type crystal structure such as LiTi₂(PO₄)₃.

Other examples include lithium titanates such as LiyTi_{3-y}O₄ (0 < y < 3) and Li₄Ti₅O₁₂ (LTO), lithium metal oxides of metals belonging to Group 5 of the periodic table such as LiNbO₃ and LiTaO₃, and oxide-based conductors such as Li₂O-B₂O₃-P₂O₅-based, Li₂O-B₂O₃-ZnO-based, and Li₂O-Al₂O₃-SiO₂-P₂O₅-TiO₂-based conductors.

The electrode active material having a coating layer can be obtained, for example, by attaching a solution containing various atoms constituting the material for forming the coating layer to the surface of the electrode active material, and then firing the electrode active material after attachment, preferably at a temperature of 200°C to 400°C.

Here, as a solution containing various atoms, for example, a solution containing alkoxides of various metals such as lithium ethoxide, titanium isopropoxide, niobium isopropoxide, and tantalum isopropoxide may be used. In this case, as the solvent, an alcoholic solvent such as ethanol and butanol, an aliphatic hydrocarbon solvent such as hexane, heptane, and octane; and an aromatic hydrocarbon solvent such as benzene, toluene, and xylene may be used.

In addition, the aforementioned attachment may be performed by immersion, spray coating, etc.

From the viewpoint of improving production efficiency and battery performance, the firing temperature is preferably 200°C or higher and 400°C or lower as mentioned above, and more preferably 250°C or higher and 390°C or lower, and the firing time is usually about 1 minute to 10 hours, and preferably 10 minutes to 4 hours.

The coverage rate of the coating layer is preferably 90% or more, more preferably 95% or more, and even more preferably 100%, i.e., the entire surface is covered, based on the surface area of the electrode active material. Furthermore, the thickness of the coating layer is preferably 1 nm or more, more preferably 2 nm or more, and the upper limit is preferably 30 nm or less, and more preferably 25 nm or less.

The thickness of the coating layer can be measured by cross-sectional observation using a transmission electron microscope (TEM), and the coverage rate can be calculated from the thickness of the coating layer, elemental analysis values, and BET specific surface area.

Examples of conductive materials include carbon-based materials, such as artificial graphite, graphite carbon fibers, resin-baked carbon, pyrolytic vapor-grown carbon, coke, mesocarbon microbeads, furfuryl alcohol resin-baked carbon, polyacene, pitch-based carbon fibers, vapor-grown carbon fibers, natural graphite, and non-graphitizable carbon, from the viewpoint of improving battery performance by enhancing electron conductivity.

By using the binder described above, the strength of the positive and negative electrodes when they are produced is improved.

The binder is not particularly limited as long as it can provide functions such as binding properties and flexibility. Examples include fluorine-based polymers such as polytetrafluoroethylene and polyvinylidene fluoride, thermoplastic elastomers such as butylene rubber and styrene-butadiene rubber, and various resins such as acrylic resin, acrylic polyol resin, polyvinyl acetal resin, polyvinyl butyral resin, and silicone resin.

The mixing ratio (mass ratio) of the electrode active material and the sulfide solid electrolyte in the electrode composite material is preferably 99.5:0.5 to 40:60, more preferably 99:1 to 50:50, and even more preferably 98:2 to 60:40, considering improved battery performance and production efficiency.

When a conductive material is contained, the content of the conductive material in the electrode composite material is not particularly limited. However, considering improved battery performance and production efficiency, it is preferably 0.5% by mass or more, more preferably 1% by mass or more, and even more preferably 1.5% by mass or more. The upper limit is preferably 10% by mass or less, more preferably 8% by mass or less, and even more preferably 5% by mass or less.

Furthermore, when a binder is contained, the content of the binder in the electrode composite material is not particularly limited. However, considering improved battery performance and production efficiency, it is preferably 1% by mass or more, more preferably 3% by mass or more, and even more preferably 5% by mass or more. The upper limit is preferably 20% by mass or less, more preferably 15% by mass or less, and even more preferably 10% by mass or less.

### [System for Conveying Sulfide Solid Electrolyte]

The system for conveying a sulfide solid electrolyte of the present embodiment includes
a compression molding equipment for compressing a powdered sulfide solid electrolyte containing a lithium atom, a sulfur atom, and a phosphorus atom to obtain a pressed powder;
a packaging equipment for filling a packaging container with the pressed powder to obtain a packaged body;
a conveying unit for conveying the packaged body; and
a crushing equipment for removing the pressed powder from the packaged body and crushing the pressed powder to obtain a crushed product.

The details of the compression molding equipment, the packaging equipment, the conveying unit, and the crushing equipment are the same as those described with respect to the method for conveying a sulfide solid electrolyte of the present embodiment.

### [Method for Producing All-Solid-State Battery Materials]

The method for producing an all-solid-state battery material according to the present embodiment includes
a step of compressing a powdered sulfide solid electrolyte containing a lithium atom, a sulfur atom, and a phosphorus atom to obtain a pressed powder;
a step of filling a packaging container with the pressed powder to obtain a packaged body;
a step of conveying the packaged body; and
a step of removing the pressed powder from the packaged body and crushing the pressed powder to obtain a crushed product.

Furthermore, another method for producing an all-solid-state battery material according to the present embodiment is a method including
a step of compressing a powdered sulfide solid electrolyte containing a lithium atom, a sulfur atom, and a phosphorus atom to obtain a pressed powder,
in which the pressed powder has a density of 0.2 g/cm³ or more.

The aforementioned other method for producing an all-solid-state battery material according to the present embodiment includes the step of obtaining a pressed powder, and the subsequent steps are not particularly limited as long as the density of the obtained pressed powder is within the above range. However, the method preferably includes the step of obtaining a packaged body, the conveying step, and the step of obtaining a crushed product, from the viewpoint of further enhancing the effects of the present embodiment.

The details of the step of obtaining the pressed powder, the step of obtaining the packaged body, the conveying step, and the step of obtaining the crushed product are the same as those described with respect to the method for conveying the sulfide solid electrolyte in the present embodiment.

The all-solid-state battery material obtained by the production method of the present embodiment is the crushed product obtained in the crushing step, that is, the sulfide solid electrolyte itself. Therefore, the details of the all-solid-state battery material are the same as those described with respect to the sulfide solid electrolyte.

### [Electrode Composite Material]

The electrode composite material of the present embodiment is a material
including the all-solid-state battery material obtained by the production method of the all-solid-state battery material and an electrode active material.

The details of the electrode active material are the same as those described with respect to the method for conveying the sulfide solid electrolyte in the present embodiment.

### [All-Solid-State Battery]

The all-solid-state battery of the present embodiment is a battery
containing the all-solid-state battery material obtained by the production method of the all-solid-state battery material in a solid electrolyte layer, or
containing the electrode composite material in at least one of a positive electrode and a negative electrode.

### [Packaged Body]

The packaged body of the present embodiment
is obtained by filling a packaging container with a pressed powder obtained by compressing a powdered sulfide solid electrolyte containing a lithium atom, a sulfur atom, and a phosphorus atom.

The packaging body of the present embodiment preferably further includes an outer container from the viewpoint of protecting the pressed powder.

The details of the sulfide solid electrolyte, the pressed powder, the packaging container, and the outer container are the same as those described with respect to the method for conveying the sulfide solid electrolyte of the present embodiment.

### Industrial Applicability

According to the conveying method of the embodiment, a sulfide solid electrolyte, which is suitably used for batteries for information-related instruments and communication instruments, such as personal computers, video cameras, and mobile phones, and also for in-vehicle applications, can be efficiently conveyed while preventing scattering.

## Claims

1. A method for conveying a sulfide solid electrolyte, comprising
a step of compressing a powdered sulfide solid electrolyte containing a lithium atom, a sulfur atom, and a phosphorus atom to obtain a pressed powder,
a step of filling a packaging container with the pressed powder to obtain a packaged body,
a step of conveying the packaged body, and
a step of removing the pressed powder from the packaged body and crushing the pressed powder to obtain a crushed product.

2. The method for conveying a sulfide solid electrolyte according to claim 1, wherein the pressed powder has a density of 0.2 g/cm³ or more.

3. The method for conveying a sulfide solid electrolyte according to claim 1 or 2, wherein, in the step of obtaining the pressed powder, a solvent is added to the powdered sulfide solid electrolyte before compressing.

4. The method for conveying a sulfide solid electrolyte according to any one of claims 1 to 3, wherein in the step of obtaining the crushed product, a solvent is added to the pressed powder before crushing.

5. The method for conveying a sulfide solid electrolyte according to any one of claims 1 to 4, wherein the packaging container includes one or more bag-like bodies, and at least one of the bag-like bodies is composed of a plastic film having a metal thin film layer.

6. The method for conveying a sulfide solid electrolyte according to any one of claims 1 to 5, further comprising packaging the packaged body in an outer container before conveying.

7. The method for conveying a sulfide solid electrolyte according to claim 6, wherein the outer container is one or more selected from a metal can and a plastic container.

8. A system for conveying a sulfide solid electrolyte, comprising:
a compression molding equipment for compressing a powdered sulfide solid electrolyte containing a lithium atom, a sulfur atom, and a phosphorus atom to obtain a pressed powder;
a packaging equipment for filling a packaging container with the pressed powder to obtain a packaged body;
a conveying unit for conveying the packaged body; and
a crushing equipment for removing the pressed powder from the packaged body and crushing the pressed powder to obtain a crushed product.

9. A method for producing an all-solid-state battery material, comprising
a step of compressing a powdered sulfide solid electrolyte containing a lithium atom, a sulfur atom, and a phosphorus atom to obtain a pressed powder;
a step of filling a packaging container with the pressed powder to obtain a packaged body;
a step of conveying the packaged body; and
a step of removing the pressed powder from the packaged body and crushing the pressed powder to obtain a crushed product.

10. An all-solid-state battery comprising an all-solid-state battery material obtained by the method for producing an all-solid-state battery material according to claim 9 in a solid electrolyte layer.

11. An electrode composite material comprising an all-solid-state battery material obtained by the method for producing an all-solid-state battery material according to claim 9 and an electrode active material.

12. An all-solid-state battery comprising the electrode composite material according to claim 11 in at least one of a positive electrode and a negative electrode.

13. A packaged body obtained by filling a packaging container with a pressed powder obtained by compressing a powdered sulfide solid electrolyte containing a lithium atom, a sulfur atom, and a phosphorus atom.

14. The packaged body according to claim 13, further comprising an outer container.

15. A method for conveying a sulfide solid electrolyte, comprising
a step of compressing a powdered sulfide solid electrolyte containing a lithium atom, a sulfur atom, and a phosphorus atom to obtain a pressed powder,
wherein the pressed powder has a density of 0.2 g/cm³ or more.

16. A method for producing an all-solid-state battery material, comprising
a step of compressing a powdered sulfide solid electrolyte containing a lithium atom, a sulfur atom, and a phosphorus atom to obtain a pressed powder,
wherein the pressed powder has a density of 0.2 g/cm³ or more.
